# EUROPEAN PATENT SPECIFICATION

(11) **EP 3 071 519 B1**
(45) Date of publication and mention of the grant of the patent: **14.11.2018**
(21) Application number: 14802596.8
(22) Date of filing: 19.11.2014
(51) Int. Cl.: C01B 32/194, B82Y 30/00, B82Y 40/00

(54) **METHOD FOR PREPARING A GRAPHENE BASED COMPOSITION**
VERFAHREN ZUR HERSTELLUNG EINER AUF GRAPHEN BASIERENDEN ZUSAMMENSETZUNG
PROCÉDÉ DE PÉPARATION D'UNE COMPOSITION À BASE DE GRAPHÈNE

(30) Priority: 19.11.2013 EP 13005421; 21.03.2014 EP 14161013
(43) Date of publication of application: 28.09.2016
(73) Proprietor: Tata Steel UK Ltd., London SW1P 4WY (GB)
(72) Inventor: BOHM, Sivasambu, 1951 JZ Velsen-Noord (NL); WEIJDE, Dammes Hans van der, 1951 JZ Velsen-Noord (NL)
(74) Representative: Blauw, Frans Gerard
(86) International application number: PCT/EP2014/003091
(87) International publication number: WO 2015/074752

(56) References cited:
- HUAFENG YANG ET AL: "Covalent functionalization of chemically converted graphene sheets via silane and its reinforcement", JOURNAL OF MATERIALS CHEMISTRY, vol. 19, no. 26, 18 May 2009 (2009-05-18), page 4632, XP055140486, ISSN: 0959-9428, DOI: 10.1039/b901421g
- NINA I. KOVTYUKHOVA ET AL: "Layer-by-Layer Assembly of Ultrathin Composite Films from Micron-Sized Graphite Oxide Sheets and Polycations", CHEMISTRY OF MATERIALS, vol. 11, no. 3, 28 January 1999 (1999-01-28), pages 771-778, XP055140685, ISSN: 0897-4756, DOI: 10.1021/cm981085u
- Chuan Xiu-Yun: "Graphene-like nanosheets synthesized by natural flaky graphite in Shandong, China", International Nano Letters 2013, 3:6, 12 February 2013 (2013-02-12), XP055140490, Retrieved from the Internet: URL:http://www.inl-journal.com/content/pdf /2228-5326-3-6.pdf [retrieved on 2014-09-16]
- XIN WANG ET AL: "Covalent functionalization of graphene with organosilane and its use as a reinforcement in epoxy composites", COMPOSITES SCIENCE AND TECHNOLOGY, ELSEVIER, UK, vol. 72, no. 6, 8 February 2012 (2012-02-08), pages 737-743, XP028466972, ISSN: 0266-3538, DOI: 10.1016/J.COMPSCITECH.2012.01.027 [retrieved on 2012-02-08]

## Description

The present invention relates to a method for preparing a graphene based composition.

Yang et al. report in J. Mater. Chem., 2009, 19, 4632-4638 about the covalent functionalization of chemically converted sheets via silane.

Batteries are electrochemical devices that convert chemical energy into electricity, and comprise an anode, a cathode and an electrolyte. When the battery is connected to an external load, or device to be powered, the anode supplies a current of electrons that flow through the load to perform work. After the work has been performed the electrodes re-enter the battery and are accepted by the cathode before the process is repeated. Unfortunately, electrolytes that are used in batteries tend to be corrosive towards the electrode materials, having the effect of reducing the working lifetime and the electrical performance of such devices. Fuel cells, which are considered to be a special type of battery suffer from the same disadvantage.

Fuel cells such as polymer electrolyte membrane (PEM) fuel cells are typically used for generating electricity in motor vehicles. In PEM fuel cells hydrogen fuel is mixed with oxygen from the air to produce electricity. A typical PEM fuel cell comprises an anode, a cathode and a polyelectrolyte membrane situated between the anode and cathode. Adjacent to the anode is a field flow plate that channels hydrogen fuel to the anode on one side of the fuel cell, while on the other side of the fuel cell, a second field flow plate is provided adjacent to the cathode for channelling oxygen to the cathode. At the anode, a catalyst, typically platinum, is used to split hydrogen into positively charged hydrogen ions and negatively charged electrons. The PEM allows only the positively charged ions to pass through to the cathode, while the negatively charged electrons are directed along an external circuit to the cathode, creating an electrical current. At the cathode, the electrons and hydrogen ions combine with oxygen to form water, which is subsequently removed from the cell. In order to obtain a useful output voltage, individual fuel cells must be interconnected in series, which may be achieved by providing a bipolar plate between two membrane-electrode assemblies (MEA).

Bipolar plates are typically made of a corrosion resistant and electrically conductive material, e.g. stainless steel. Although stainless steel exhibits a low rate of corrosion due to formation of a natural surface oxide, the oxide layer is not highly conductive, which leads to an increase in the internal resistance of the fuel cell and a reduction in electrical performance. Further, stainless steel is expensive to manufacture and therefore the use of bipolar plates comprising stainless steel increases the overall cost of fuel cell devices. As an alternative to stainless steel bipolar plate materials, cold rolled steel substrates may be provided with a chromium-nickel-molybdenum coating using an electrochemical deposition process. While the cost of such coated substrates is reduced relative to stainless steel, the chromium-nickel-molybdenum coating has a porosity that leads to an unacceptable increase in the rate of corrosion. To address the porosity issue one or more additional coating layers may be provided on the chromium-nickel-molybdenum coating. However, this will increase the contact resistance of the bipolar plate, and therefore a reduction in electrical performance will be obtained. Chemical vapour deposition (CVD) has also been used to deposit stainless steel type coatings and molybdenum coatings on cold rolled steel substrates. However, the use of chemical vapour deposition has the disadvantage that it is a non-continuous and expensive vacuum based process. Further, and in the case of molybdenum coatings, a reduction in conductivity may be observed over time since corrosion products that form during fuel cell use are electrically insulating.

It is an object of the invention to provide a highly conductive coating composition which can be prepared at low cost and under atmospheric conditions.

In the context of the present invention the term "graphene" shall refer to multilayer graphene comprising >20 layers of graphene. The terms "stacked graphene" and "graphene stacks" shall encompass double-layer graphene, triple-layer graphene and multilayer graphene (4-20 layers). Finally, the term "graphene" shall encompass single-layer graphene, double-layer graphene, triple-layer graphene and multilayer graphene (4-20 layers).

The invention relates to a method for preparing a graphene based composition, which comprises the steps of:
- subjecting a composition that contains water and a graphene precursor to a mechanical treatment and to a chemical treatment in order to form graphene,
- wherein the chemical treatment comprises the steps of mixing the composition with an oxidant and an acid;
- separating graphene from the mechanically and chemically treated composition to form a graphene based composition,
- mixing the composition with a first coupling agent that is capable of reacting with graphene and a second coupling agent that is capable of reacting with graphene and the first coupling agent,
- wherein the first coupling agent and/or the second coupling agent comprises an organosilane or an organofunctional siloxane
- wherein the graphene is formed by subjecting the composition comprising water and the graphene precursor to at least two mechanical treatments,
- wherein the mechanical treatments comprises wet ball milling and sonication, and
- wherein the composition is mixed with the first coupling agent and/or the second coupling agent as part of the chemical treatment before the step of separating graphene from the mechanically and chemically treated composition.

The inventors found that a highly conductive composition could be obtained under atmospheric conditions and at low cost. Unlike conventional methods for preparing graphene based compositions, which subject compositions containing a graphene precursor to a single mechanical treatment or to single a chemical treatment, the above method subjects the compositions containing a graphene precursor to at least two mechanical treatments and to a chemical treatment.

Preferably the graphene precursor comprises natural graphite or synthetic graphite. Irrespective of the type of graphite used, a high content of graphene was obtained after the composition was subjected to the mechanical and chemical treatments. By mechanically treating a composition that comprises water and a graphene precursor, a composition comprising single-layer graphene, double-layer graphene, triple-layer graphene and multilayer graphene (4-20 layers) can be obtained. Preferably a mechanical treatment comprises wet ball milling and/or high shear mixing since this increases the surface area of the graphene precursor in the composition, which enables increased interaction between graphene and the chemicals of the chemical treatment. By exerting high shear on the grapheme precursor, either by high speed mixing or any other microfluidic process exerting high shear on the graphene precursor, the graphene is at least partly exfoliated therewith increasing the surface area of the graphene precursor.

The content of graphene in the composition can be increased by subjecting the composition to a chemical treatment, preferably by mixing the composition with an oxidant and an acid. The acid increases the interlayer spacing between layers of the graphene precursor and the graphene stacks, which allows for increased penetration of the oxidant into the interlayer space. The oxidant then causes the chemical breakdown of the graphene precursor into graphene. The oxidant also causes the chemical breakdown of stacked graphene into single-layer graphene or into graphene stacks comprising fewer layers. The chemical treatment also results in the formation of edge graphene. The acid preferably comprises a mild acid such as acetic acid. Mild acids are preferred over strong acids e.g. nitric acid and hydrochloric acid, since the generation of nitrate ions and chloride ions, which are known to increase the rate of corrosion in applied coatings is avoided. The oxidant preferably comprises hydrogen peroxide, although permanganate or perchloric acid can also be used. The use of weaker oxidants is also possible but these are less effective at chemically breaking down the graphene precursor and the graphene stacks into single-layer graphene and graphene stacks comprising fewer layers. The chemical treatment may also comprise the step of mixing the composition with a surfactant. The use of a surfactant, for instance tetra butyl ammonium salt, helps to increase the interlayer spacing between the layers of the graphene precursor and of graphene stacks and therewith the exfoliation the graphene precursor and of graphene stacks.

The content of graphene in the composition can be increased by subjecting the composition to a second mechanical treatment. The second mechanical treatment results in the mechanical breakdown of graphene precursors, e.g. graphene precursors that were not broken down during a first mechanical treatment or during the chemical treatment into graphene. Preferably the second mechanical treatment comprises sonication, more preferably ultrasonciation. Sonication and ultrasonciation were particularly effective at increasing the content of graphene in the composition.

Following the mechanical and chemical treatments, graphene is separated from the graphene precursor to form a graphene based composition. Preferably graphene is separated from the mechanically and chemically treated composition by centrifugation. When the graphene based composition is applied onto a substrate, a smooth and highly conductive coating is obtained. If graphene is not separated from the composition, i.e. the composition that is obtained after the mechanical and chemical treatments, then an increase in surface roughness and contact resistance of the applied coating is obtained.

By mixing the graphene based composition with a first coupling agent capable of reacting with graphene, it is possible to obtain a composition that comprises functionalised graphene. Such a composition is highly conductive but also very adhesive when applied onto a metal or metal alloy substrate. In addition, the coupling agent reduces porosity within the applied coating, thereby reducing the rate at which the metal or metal alloy substrate is corroded.

In a preferred embodiment the composition that contains water and the graphene precursor is subjected to a first mechanical treatment, a chemical treatment and then a second mechanical treatment, This sequence (mechanical-chemical-mechanical) of treating the composition is particularly preferred since compositions containing a high content of graphene could be obtained. In another embodiment the composition containing water and the graphene precursor is subjected to a chemical treatment prior to subjecting the composition to at least two mechanical treatments. Similarly, the composition containing water and the graphene precursor may be subjected to two mechanical treatments before being subjected to a chemical treatment. Compositions containing a high content of graphene may be obtained by following the method steps above, since in each case, the composition is subjected to at least two mechanical treatments and a chemical treatment. The graphene based composition is mixed with a second coupling agent that is capable of reacting with graphene and the first coupling agent. Mixing the graphene based composition with the second coupling agent results in a composition that comprises graphene that is functionalised with the first coupling agent and the second coupling agent. Since the second coupling agent is capable of reacting with graphene and the first coupling agent, adjacent graphenes can be chemically linked to provide a composition that is highly conductive and which exhibits a low contact resistance when applied as a coating on a metal or metal alloy substrate. In addition, the composition may comprise graphene functionalised with the first coupling agent only and/or graphene functionalised with the second coupling agent only. The composition is mixed with the first coupling agent and/or the second coupling agent before the step of separating graphene from the mechanically and chemically treated composition. It is particularly preferred to provide the first coupling agent and/or the second coupling agent as part of the chemical treatment, i.e. together with the oxidant and the acid. By subjecting the graphene to a two step functioanlisation process it is understood that a greater proportion of graphene will become functionalised, resulting in improvements in adhesion, contact resistance and corrosion resistance. When the method comprises the steps of providing the first coupling agent and the second coupling agent, it is advantageous to use a two-step functioanlisation process in which one of the coupling agents is added to the mechanically and chemically treated composition and the other coupling agent is added to the graphene based composition. This avoids or at least reduces the undesirable reaction between the first coupling agent and the second coupling agent before the first coupling agent and the second coupling agent have reacted with graphene. The first coupling agent and/or the second coupling agent comprises an organosilane, preferably a hydroxysilane, an epoxysilane or an aminosilane (such as N-2-aminoethyl-3-aminopropyl triethoxysilane, 3-aminopropyltrimethoxysilane,3-aminopropyltriethoxysilane). The use of organosilanes is preferred since they may be provided in a water based solution and therefore problems associated with the handling and disposal of organic solvents is avoided. By using organosilanes strong chemical bonds may be formed between adjacent functionalised graphenes. Moreover, very good adhesion is obtained when such a composition is applied onto a metal or metal alloy substrate since strong chemical bonds also form between the organosilane and the metal or metal alloy surface. Both effects contribute to improving the corrosion protective and electrical performance of an applied graphene based coating. Preferably, the water based solution comprising the organosilane has a pH between pH 4 and pH7. When the organosilane is provided in a mildly acidic > pH 4 - pH 6 or pH neutral water based solution, the lifetime of the composition may be extended. The first coupling agent and/or the second coupling agent comprises an organofunctional siloxane, preferably an organofunctional siloxane oligomer. Very good adhesion and corrosion protective properties are obtained when graphene and the graphene stacks are functionalised with the first organofunctional siloxane coupling agent and/or the second organofunctional siloxane coupling agent. Improvements in electrical performance are also obtained when the first coupling agent and/or the second coupling agent comprise an organofunctional siloxane. Preferably the organofunctional groups of the siloxane or siloxane oligomer are selected from one or more of monoamines, diamines, amino-alkyls, alkyls, epoxies and hydroxyls. These organofunctional groups are very suitable for reacting with graphene and the graphene stacks as well as with adjacent organofunctional siloxane coupling agents. When the organofunctional groups comprise epoxies, the organofunctional siloxane preferably also comprises hydroxyl groups to improve the solubility of the siloxane or siloxane oligomer in water.

In a preferred embodiment the composition containing water and the graphene precursor is subjected to a thermal and/or electromagnetic treatment. Preferably, the composition is thermally and/or electromagnetically treated after the chemical treatment. Subjecting the composition to a thermal and/or an electrochemical treatment promotes the breakdown of the graphene precursor into graphene. It also promotes the breakdown of graphene stacks into single-layer graphene or into graphene stacks comprising fewer layers. Thus, when graphene is separated to form the graphene based composition, the content of graphene in the graphene based composition is greatly increased. Subjecting the composition to a microwave (MW) treatment is preferred since a MW treatment is faster and more cost effective than a corresponding thermal treatment. The thermal and/or electromagnetic treatment could also be applied to the graphene based composition. An aspect which is not part of the invention relates to a method for manufacturing a coated substrate, wherein the graphene based composition prepared according to the first aspect of the invention is provided on a metal or metal alloy substrate, after which the coated metal or metal alloy substrate is subjected to a heat treatment of at least 100°C. Preferably the peak metal temperature of the coated metal or metal alloy substrate is at least 90°C, preferably between 100 and 120°C.

With a "metal substrate" or "metal alloy substrate" comprises a large range of different substrates and with different thicknesses, including metal foils used in electrochemical devices.

By applying the graphene based composition produced according to the first aspect of the invention on a metal or metal alloy substrate, a coated substrate suitable for use in an electrochemical device is obtained. A heat treatment of at least 100°C is necessary in order to remove water and to cure the applied graphene based composition. During curing, functionalised graphene reacts with the metal or metal alloy substrate, thereby enhancing the adhesion between the coating and the substrate. It was also found that the graphene based coating exhibited very good flexibility.

In a preferred embodiment the graphene based composition is provided on the metal or metal alloy substrate by electrophoretic deposition. Electrophoretic deposition is preferred since it can be used to deposit a coating onto any electrically conductive surface, making it particularly suitable for depositing the graphene based coating onto a variety of metal or metal alloy substrates. By varying the current during electrophoretic deposition, the thickness of the coating can be fine tuned to suite a specific need. Moreover, very thin and uniform coatings with minimal porosity can be obtained.

In a preferred embodiment the graphene based composition is provided on the metal or metal alloy substrate as part of a continuous roll-to-roll manufacturing route. This is possible because the graphene based composition can be applied by electrophoretic deposition, coil coating, spraying, bar coating or by 3-D printing, and is not deposited by a vacuum based technology such as chemical vapour deposition. Another aspect which is not part of the invention relates to a coated substrate, which comprises a metal or metal alloy substrate provided with a graphene based coating, wherein the graphene based coating comprises graphene and a first coupling agent that is coupled to graphene and to the metal or metal alloy substrate. The coated substrate of the invention exhibits a contact resistance and a corrosion rate that is significantly lower than that of substrates that are typically used in electrochemical devices such as fuel cells and batteries. Thus, the coated substrate is suitable for use in electrochemical devices such as batteries and fuel cells.

Preferred the substrate comprises cold rolled steel, stainless steel, nickel plated steel or nickel-cobalt plated steel. By using cold rolled steel the overall cost of the coated substrate may be reduced relative to stainless steel and nickel plated steel substrates. Although more expensive than cold rolled steel, it has been shown that the contact resistance and the corrosion rate of stainless steel and nickel plated steel substrates could be reduced when provided with the graphene based coating. For certain applications where corrosion resistance is particularly important, it may be preferable to provide coated stainless or nickel plated steel substrates, despite the additional cost. Stainless steel substrates are particularly suitable as bipolar plates in fuel cell applications, whereas coated nickel and nickel-cobalt plated steel substrates are particularly suitable for battery applications. Coated cold rolled steels may be used in both fuel cell and battery applications as replacements for stainless steel and nickel plated steel substrates. Preferred graphene based coating comprises graphene functionalised with the first coupling and graphene functionalised with a second coupling agent capable of reacting with the first coupling agent. To his end separate mixtures are made of graphene functionalised with the first coupling and graphene functionalised with a second coupling agent, which mixtures are subsequently mixed with each other.

In such instances the contact resistance of the coated substrate could be reduced. This has been attributed to the coating comprising a conductive network formed from the reaction between a graphene comprising the first coupling agent and a graphene comprising the second coupling agent. Preferably the conductive network is formed from the reaction of graphenes comprising both the first coupling agent and the second coupling agent. Preferably the first and/or second coupling agents comprise organofunctional siloxanes or organofunctional siloxane oligomers. The organofunctional groups are preferably selected from one or more of monoamines, diamines, amino-alkyls, alkyls, epoxies and hydroxyls. Preferred the graphene based coating has a thickness of up to 10 µm, preferably between 0.1 and 5 µm, more preferably between 0.1 and 3 µm. The thickness of the graphene based coating should not be greater than 10 µm otherwise resistive losses within the layer are too high and a reduction in electrical performance will be obtained. Improvements in contact resistance can be obtained by reducing the thickness of the coating to between 0.1 and 5 µm. Further improvements in contact resistance can be obtained by reducing the coating layer thickness to between 0.1 and 3 µm without significantly sacrificing the corrosion protective properties of the coating. A good balance between contact resistance and corrosion rate may be obtained when the graphene based coating has a thickness between 1 and 3 µm. The coating may be applied in two subsequent steps wherein a first coating layer based on a functionalised graphene with a first coupling agent is applied to a substrate and a second coating layer based on a functionalised graphene with a second coupling agent is applied on the first coating layer. The coating method for the first and second coating layer may be different, for instance electrophoretic deposition for the first coating layer and a continuous roll-to-roll method for the second coating layer.

The invention will be now be elucidated by way of example. These examples are intended to enable those skilled in the art to practice the invention and do not in anyway limit the scope of the invention as defined by the claims.

A water based solution comprising 10 g graphite (TIMCAL ®) and water (100 mL) was provided in a ball mill and the solution was milled for two hours at 8000 rpm. Hydrogen peroxide (5 mL) and acetic acid (10 mL) were added to the milled solution (50 mL) and this solution was mechanically stirred for one hour. The stirred solution was then subjected to an ultrasonic treatment for 1 hr, after which the solution was centrifuged to separate graphene from the solution. The solution comprising the separated graphene was then mixed with an acidified (pH 6) water based solution that contained a silane, an organofunctional siloxane or an organofunctional siloxane oligomer. It is also possible to first acidify the graphene based solution and then mix the acidified graphene based solution with an appropriate coupling agent.

This solution was then bar coated onto a stainless steel (SS 304L) substrate and heated to a temperature of 180°C in a Mathis oven for one minute. The peak metal temperature of the coated stainless steel substrate was 120°C.

The interfacial contact resistance (ICR) of the coated substrate was determined using electrochemical impedance spectroscopy (EIS). As a first step, the ICR of two untreated Toray papers TGP-H-60 (a commonly used gas diffusion layer) was measured by placing the Toray papers between two gold coated copper electrodes, which were subsequently pneumatically compressed. The Toray papers are removed and replaced by two fresh Toray papers, each being placed adjacent to the two gold coated copper electrodes. The coated stainless steel substrate was then placed between the two fresh Toray papers and the process was repeated. The Toray paper ICR values were subtracted from the coated substrate ICR values (sample + Toray paper) to establish the ICR values originating from the sample only, which were noramlised for sample area (mΩ.cm²).

ICR values were obtained at a compression pressure of 140 (N/cm²) for coated and uncoated stainless steel (SS304L and SS316L), nickel plated steel (Hilan®), and electrolytic chrome-coated steel (ECCS) substrates. The ICR values are shown in Table 1.

The results show that the ICR values for the uncoated substrates (examples 1-4) were significantly higher than the ICR values obtained for substrates provided with the graphene based coating (examples 5-8).

Examples 5-8, which do not form part of the invention, relate to substrates provided with graphene based coatings where graphene and the graphene stacks were functionalised with organofunctional siloxane oligomers. In these examples, the pH of the solution comprising the separated graphene and graphene stacks was adjusted to pH 5. This acidified solution was then mixed with 50 mL of an aminoalkyl-functional siloxane oligomer (Hydrosil 2627, Evonik). 200 mL of an epoxy-functional siloxane oligomer (Hydrosil 2909, Evonik) was then added to the mixed solution containing graphene, the graphene stacks and the aminoalkyl-functional siloxane oligomer.

The reduction in contact resistance has been attributed to the high conductivity of the graphene based coating. The results also show that the contact resistance of the uncoated Hilan substrate was much lower than the uncoated stainless steel and ECCS substrates, and that the coated Hilan substrate exhibited the best contact resistance of all of the substrates tested.

**Table 1**

| Example | Substrate | Coated (Y/N) | ICR (mΩcm²) |
|---|---|---|---|
| 1 | Hilan | N | 61.86 |
| 2 | ECCS | N | 555.58 |
| 3 | SS304L | N | 566.52 |
| 4 | SS316L | N | 469.64 |
| 5 | Hilan | Y | 11.05 |
| 6 | ECCS | Y | 21.17 |
| 7 | SS304L | Y | 25.88 |
| 8 | SS316L | Y | 26.80 |

The corrosion performance of the coated stainless steel substrate was determined using linear sweep voltammetry (LSV) at a temperature of 80°C. The electrolyte used for the experiment was 1 M sulphuric acid doped with 2 ppm F⁻. The coated stainless steel substrate was allowed to equilibrate with the electrolyte for 30 minutes. Once the temperature and the open circuit voltage were constant, a LSV curve was obtained by sweeping the voltage from -0.5 V to 1.5 V at a scan rate of 1mV per second. The resulting current versus voltage curve was plotted on a logarithmic scale. Tafel analysis was performed on the curve such that the results of the corrosion performance test could be reported in terms of rate of corrosion (mm/year). The corrosion performance results were obtained for coated and uncoated stainless steel (SS304L and SS316L), nickel plated steel (Hilan®), and electrolytic chrome-coated steel (ECCS) substrates. The results of the corrosion performance test are shown in Table 2. Examples 13-16, which do not form part of the invention, relate to substrates provided with graphene based coatings where graphene and the graphene stacks were functionalised with organofunctional siloxane oligomers. These graphene based coatings correspond with the graphene based coatings of examples 5-8.

The corrosion performance test results show that the uncoated Hilan substrate exhibited the highest rate of corrosion of all the substrates tested. The results also show that the rate of corrosion for the coated substrates is much lower than that of the uncoated substrates, and that the coated stainless steel substrate (SS304L) exhibited the lowest rate of corrosion.

**Table 2**

| Example | Substrate | Coated (Y/N) | Corrosion rate (mm/year) |
|---|---|---|---|
| 9 | Hilan | N | 114.1 |
| 10 | ECCS | N | 33.47 |
| 11 | SS304L | N | 0.716 |
| 12 | SS316L | N | 0.535 |
| 13 | Hilan | Y | 0.0114 |
| 14 | ECCS | Y | 0.402 |
| 15 | SS304L | Y | 0.0001962 |
| 16 | SS316L | Y | 0.008593 |

## Claims

1. Method for preparing a graphene based composition, which comprises the steps of:
- subjecting a composition that contains water and a graphene precursor to a mechanical treatment and to a chemical treatment in order to form graphene,
- wherein the chemical treatment comprises the steps of mixing the composition with an oxidant and an acid;
- separating graphene from the mechanically and chemically treated composition to form a graphene based composition,
- mixing the composition with a first coupling agent that is capable of reacting with graphene and a second coupling agent that is capable of reacting with graphene and the first coupling agent,
- wherein the first coupling agent and/or the second coupling agent comprises an organosilane or an organofunctional siloxane
- wherein the graphene is formed by subjecting the composition comprising water and the graphene precursor to at least two mechanical treatments,
- wherein the mechanical treatments comprises wet ball milling and sonication, and
- wherein the composition is mixed with the first coupling agent and/or the second coupling agent as part of the chemical treatment before the step of separating graphene from the mechanically and chemically treated composition.

2. Method according to claim 1, wherein the composition that contains water and the graphene precursor is subjected to a first mechanical treatment, a chemical treatment and then a second mechanical treatment.

3. Method according to claim 1, wherein the organosilane is preferably a hydroxysilane, an epoxysilane or an aminosilane.

4. Method according to claim 1, wherein the organofunctional siloxane is preferably an organofunctional siloxane oligomer.

5. Method according any one of the preceding claims, wherein the composition containing water and the graphene precursor is subjected to a thermal and/or electromagnetic treatment.

## Patentansprüche

1. Verfahren zur Herstellung einer Zusammensetzung auf Graphen-Basis, das die folgenden Schritte umfasst:
- Unterziehen einer Zusammensetzung, die Wasser und einen Graphen-Vorläufer enthält, einer mechanischen Behandlung und einer chemischen Behandlung, um Graphen zu bilden,
- wobei die chemische Behandlung die Schritte eins Mischens der Zusammensetzung mit einem Oxidationsmittel und einer Säure umfasst;
- Abtrennen von Graphen von der mechanisch und chemisch behandelten Zusammensetzung, um eine Zusammensetzung auf Graphen-Basis zu bilden,
- Mischen der Zusammensetzung mit einem ersten Kopplungsmittel, das mit Graphen reagieren kann, und einem zweiten Kupplungsmittel, das mit Graphen und dem ersten Kopplungsmittel reagieren kann,
- wobei das erste Kopplungsmittel und/oder das zweite Kopplungsmittel ein Organosilan oder ein organofunktionelles Siloxan umfasst,
- wobei das Graphen gebildet wird, indem die Zusammensetzung, die Wasser und den Graphen-Vorläufer umfasst, mindestens zwei mechanischen Behandlungen unterzogen wird,
- wobei die mechanischen Behandlungen Nasskugelmahlen und Beschallung umfassen, und
- wobei die Zusammensetzung mit dem ersten Kopplungsmittel und/oder dem zweiten Kopplungsmittel als Teil der chemischen Behandlung vor dem Schritt der Abtrennung von Graphen von der mechanisch und chemisch behandelten Zusammensetzung gemischt wird.

2. Verfahren nach Anspruch 1, wobei die Zusammensetzung, die Wasser und den Graphen-Vorläufer enthält, einer ersten mechanischen Behandlung, einer chemischen Behandlung und dann einer zweiten mechanischen Behandlung unterzogen wird.

3. Verfahren nach Anspruch 1, wobei das Organosilan vorzugsweise ein Hydroxysilan, ein Epoxysilan oder ein Aminosilan ist.

4. Verfahren nach Anspruch 1, wobei das organofunktionelle Siloxan vorzugsweise ein organofunktionelles Siloxanoligomer ist.

5. Verfahren nach einem der vorherigen Ansprüche, wobei die Zusammensetzung, die Wasser und den Graphen-Vorläufer enthält, einer thermischen und/oder elektromagnetischen Behandlung unterzogen wird.

## Revendications

1. Procédé de préparation d'une composition à base de graphène, laquelle comprend les étapes de :
- soumission d'une composition qui contient de l'eau et un précurseur de graphène à un traitement mécanique et à un traitement chimique afin de former du graphène,
- dans lequel le traitement chimique comprend les étapes de mélange de la composition avec un oxydant et un acide ;
- séparation du graphène de la composition traitée mécaniquement et chimiquement pour former une composition à base de graphène,
- mélange de la composition avec un premier agent de couplage qui peut réagir avec le graphène et un second agent de couplage qui peut réagir avec le graphène et le premier agent de couplage,
- dans lequel le premier agent de couplage et/ou le second agent de couplage comprennent un organosilane ou un siloxane organofonctionnel,
- dans lequel le graphène est formé en soumettant la composition comprenant de l'eau et le précurseur de graphène à au moins deux traitements mécaniques,
- dans lequel les traitements mécaniques comprennent le broyage à billes humides et la sonication, et
- dans lequel la composition est mélangée avec le premier agent de couplage et/ou le second agent de couplage dans le cadre du traitement chimique avant l'étape de séparation du graphène de la composition traitée mécaniquement et chimiquement.

2. Procédé selon la revendication 1, dans lequel la composition qui contient de l'eau et le précurseur de graphène est soumise à un premier traitement mécanique, à un traitement chimique et ensuite à un second traitement mécanique.

3. Procédé selon la revendication 1, dans lequel l'organosilane est de préférence un hydroxysilane, un époxysilane ou un aminosilane.

4. Procédé selon la revendication 1, dans lequel le siloxane organofonctionnel est de préférence un oligomère de siloxane organofonctionnel.

5. Procédé selon l'une quelconque des revendications précédentes, dans lequel la composition contenant de l'eau et le précurseur de graphène est soumise à un traitement thermique et/ou électromagnétique.
